# EUROPEAN PATENT APPLICATION

(11) **EP 1 521 059 A1**
(43) Date of publication of application: **06.04.2005**
(21) Application number: 04023050.0
(22) Date of filing: 28.09.2004
(51) Int. Cl.: G01C 21/36, G02B 27/01

(54) **Route guidance apparatus, method and program**

(30) Priority: 30.09.2003 JP 2003341020; 30.09.2003 JP 2003341022; 25.03.2004 JP 2004088578
(71) Applicant: Mazda Motor Corporation, Aki-gun Hiroshima-ken (JP)
(72) Inventor: Ohmura, Hiroshi, Aki-Gun Hiroshima-Ken (JP); Ikeda, Kenichi, Aki-Gun Hiroshima-Ken (JP)
(74) Representative: Laufhütte, Dieter, Dr.-Ing.

(57) **Abstract**

A route guidance apparatus for guiding a vehicle to a set destination is provided. The apparatus includes a guide vehicle display device that displays a virtual guide vehicle running ahead of the vehicle to guide the vehicle to the destination superimposed on an actual landscape being viewed by a driver of the vehicle and a display modification device that modifies a display position and/or a display mode of the virtual guide vehicle based on a predetermined condition.

## Description

### BACKGROUND OF THE INVENTION

### Field of the Invention

The present invention relates to a route guidance apparatus, method and program, and in particular to a route guidance apparatus, method and program that supports the driving of a vehicle by providing the driver with route information relating to the route the vehicle should take. Explanation of the Related Art

There is conventionally known a route guidance (car navigation) apparatus that supports the driving of a vehicle by providing route information relating to the route to the destination. An example of such an apparatus is disclosed by Japanese Patent Unexamined Publication No. 11-101653.

In the conventional route guidance apparatus, the route information is displayed to the driver on a monitor screen located near a center console of the vehicle. Therefore, after looking at the route information displayed on the screen, the driver looks at the road ahead and matches the information shown on the screen with the actual landscape of buildings and signs and the like, and decides which roads to take and the intersections at which he (or she) should turn.

In some cases, therefore, when the driver cannot match the displayed information with the actual landscape, he can take the wrong road, or miss his turning while determining where he should turn. Moreover, in order to obtain the route information from the monitor screen, the driver has to move his eyes from the road ahead to the screen, a major movement of his line of sight that can be an impediment to safe driving.

There are cases in which there are a plurality of vehicles driving to a destination in a group that are guided by following the lead vehicle running at the head of the group. In such a case, the drivers of follower vehicles do not have to match the screen information to the actual landscape and decide which road to take, so the burden on those drivers is very light. Safety is also increased by the fact that they do not have to move their line of sight from the from the road ahead to the console.

The present inventors found that if instead of using an actual lead vehicle a route guidance apparatus were able to display an image of a guide car superimposed on the landscape to the front of a vehicle, a driver would no longer have to decide which road to take and he would not have to move his eyes so much, so such an arrangement would have the same merits as when a real vehicle is followed to a destination.

However, there was a risk that when a route guidance apparatus displayed a virtual image of a guide car on the road ahead, the virtual guide vehicle would be superimposed on objects (such as obstacles and road signs) which need to be visible to ensure driving safety, preventing the driver from seeing such objects. Thus, a new problem would be created in the form of the inability of the driver to safely follow the virtual guide vehicle.

Another problem was that the superimposition of the virtual guide vehicle on an actual car on the road ahead had an unsettling effect on drivers.

### SUMMARY OF THE INVENTION

It is therefore an object of the present invention to provide a route guidance apparatus, method and program that provides improved safety by reducing the driver's line-of-sight movements and also uses a virtual guide vehicle image that clearly shows the driver which way to go without having an unsettling effect.

It is a further object of the invention to provide a route guidance apparatus, method and program that enables a vehicle to be driven with substantially the same feeling as when a driver is following an actual guide car.

In accordance with the present invention, the above objects are attained by providing a route guidance apparatus for guiding a vehicle to a set destination, the apparatus comprising guide vehicle display means for displaying a virtual guide vehicle running ahead of the vehicle to guide the vehicle to the destination superimposed on an actual landscape being viewed by a driver of the vehicle, and display modification means for modifying a display position and/or a display mode of the virtual guide vehicle based on a predetermined condition.

In accordance with the present invention, when the vehicle is being guided to the destination, the virtual guide vehicle runs along the route to be taken in the landscape to the front of the vehicle where the driver is looking, so all the driver has to do is follow the virtual guide vehicle. This ensures the proper route is taken, and also improves safety by reducing the amount by which the driver has to move his eyes. Moreover, enabling the virtual guide vehicle display position and the like to be modified when a predetermined condition applies makes it possible to prevent the virtual guide vehicle from obstructing the view of objects which need to be seen,

In a preferred embodiment of the present invention, the guide vehicle display means displays the virtual guide vehicle with a transmissivity that enables the actual landscape to be seen.

This improves safety by ensuring that the driver can always see the real landscape through the virtual guide vehicle.

In a preferred embodiment of the present invention, the apparatus further comprises detection means for detecting an obstruction in front of the vehicle, and when an obstruction is detected the display modification means modifies a display position and/or a display mode of the virtual guide vehicle to enable the driver to see the obstruction.

In accordance with the embodiment of the present invention, when an obstruction is detected such as a car parked on the shoulder or something that has fallen on the road, the display of the virtual guide vehicle is modified to ensure safety by making sure the obstruction can be seen.

In a preferred embodiment of the invention, when an obstruction is detected the display modification means increases the transmissivity of the virtual guide vehicle without changing the display position of the virtual guide vehicle. This ensures that the driver can see the obstruction through the virtual guide vehicle, and prevents the driver being unsettled by the display position of the virtual guide vehicle being moved.

In a preferred embodiment of the invention, when the obstruction is detected the display modification means increases the transmissivity of a side of the virtual guide vehicle near a shoulder of a road.

This makes it easier to see cars parked on the shoulder of the road, bicycles riding on the shoulder, and oncoming vehicles that have departed from their lane.

In a preferred embodiment of the invention, when the obstruction is detected the display modification means increases the transmissivity of the shoulder side of the virtual guide vehicle.

This makes it easier to see cars parked on the shoulder, bicycles riding on the shoulder, pedestrians walking on the shoulder, and so forth.

In a preferred embodiment of the invention, when the obstruction is detected the display modification means increases the transmissivity of the peripheral portion of the virtual guide vehicle so that it is higher than the transmissivity of the center portion of the virtual guide vehicle.

In a preferred embodiment of the invention, when the obstruction is detected the display modification means makes the virtual guide vehicle smaller to make the obstruction visible without laterally changing the display position of the virtual guide vehicle.

In accordance with the embodiment of the present invention, since the apparent running position of the virtual guide vehicle does not change, the driver is not unsettled by the change in the display mode.

In a preferred embodiment of the invention, when the obstruction is detected the display modification means decreases the size of the virtual guide vehicle, with the decrease centering on the center of the virtual guide vehicle.

In accordance with the embodiment of the present invention, since there is therefore no change in the route being described by the central part of the virtual guide vehicle, the driver is not unsettled by the change in the display mode.

In a preferred embodiment of the invention, as the speed of the vehicle increases, the display modification means increases the virtual guide vehicle transmissivity or decreases the virtual guide vehicle size.

This ensures that at high speeds and the like, the virtual guide vehicle is not too conspicuous in the driver's field of view, and makes it possible for the driver to look into the distance.

In a preferred embodiment of the invention, at low vehicle speeds the display modification means modifies the virtual guide vehicle transmissivity and size and at high vehicle speeds modifies only the virtual guide vehicle transmissivity.

In accordance with the embodiment of the present invention, when driving at high speeds at which the driver can readily be disoriented, the transmissivity of the virtual guide vehicle is only increased, keeping driver discomfort down.

In a preferred embodiment of the invention, the display modification means determines a timing for when the driver should see an obstruction and in accordance with that timing modifies the virtual guide vehicle display position to enable the driver to thus see the obstruction.

This ensures that the driver can see an obstruction by moving the position at which the virtual guide vehicle is displayed.

In a preferred embodiment of the invention, along with the modification to the virtual guide vehicle display position, the display modification means decreases the size of the virtual guide vehicle size, reducing the unsettling effect that large movements of the virtual guide vehicle can have on the driver.

In a preferred embodiment of the invention, along with the modification to the virtual guide vehicle display position the display modification means increases the virtual guide vehicle transmissivity.

In accordance with the embodiment of the present invention, by making the virtual guide vehicle more transparent as it is being moved, reducing the unsettling effect that moving the virtual guide vehicle can have on the driver.

In a preferred embodiment of the invention, the display modification means increases the transmissivity of the virtual guide vehicle before decreasing the size.

Thus making the virtual guide vehicle more transparent as it is being moved reduces the unsettling effect that the movement of the virtual guide vehicle can have on the driver.

In a preferred embodiment of the invention, the display modification means limits changes to the display position of the virtual guide vehicle to keep the vehicle from departing from its running lane.

This keeps the driver from entering the opposite lane by following the virtual guide vehicle when it moves into the opposite lane.

In a preferred embodiment of the invention, the apparatus includes second route guidance means for carrying out route guidance when the display mode is being modified.

This allows the route guidance to be reliably carried out by the second route guidance means when the guidance function of the virtual guide vehicle is degraded during modification of the display mode or the like.

In a preferred embodiment of the invention, the display modification means continues to modify the virtual guide vehicle display position or display mode for a predetermined time.

This prevents the driver being unsettled by, for example, frequent changes to the display position.

In a preferred embodiment of the invention, the apparatus further comprises preceding vehicle detection means for detecting a preceding vehicle and a distance to the preceding vehicle, wherein when a preceding vehicle is detected, the display modification means modifies the virtual guide vehicle display position and/or display mode at a predetermined timing that enables the driver to see the preceding vehicle.

This ensures that the view of a vehicle that is actually ahead is not impeded by the virtual guide vehicle.

In a preferred embodiment of the invention, when a preceding vehicle is detected, the display modification means displays the virtual guide vehicle between the vehicle and the preceding vehicle.

This prevents the driver being unsettled by the virtual display of the virtual guide vehicle being superimposed on an actual preceding vehicle.

In a preferred embodiment of the invention, when the distance to the preceding vehicle is a predetermined value or below, the display modification means contracts the display of the virtual guide vehicle.

When the headway distance to the preceding vehicle is small, this enables the virtual guide vehicle to be displayed between the two vehicles without unsettling the driver.

In a preferred embodiment of the invention, the apparatus further comprises third route guidance means for displaying guidance information superimposed on an obstruction or preceding vehicle.

This ensures that the required route guidance information is communicated to the driver.

In a preferred embodiment of the invention, the third route guidance means displays the road and direction that should be taken.

In a preferred embodiment of the invention, the apparatus further comprises prohibiting means for prohibiting the display modification means from modifying the virtual guide vehicle display position and/or display mode.

In accordance with the embodiment of the present invention, virtual guide vehicle display modification means can be prohibited in areas in which there is a very high volume of traffic and the driver can be unsettled by the resulting high frequency of changes to the virtual guide vehicle display position and the like.

In a preferred embodiment of the invention, the guide vehicle display means displays the virtual guide vehicle in predetermined display conditions.

By thus making it possible to use the guide vehicle display means to arbitrarily set the virtual guide vehicle display conditions, a virtual guide vehicle display condition can be obtained that matches the running environment.

In a preferred embodiment of the invention, the guide vehicle display means displays the virtual guide vehicle running at a predetermined headway distance corresponding to the speed of the vehicle, and as the speed of the vehicle increases the display modification means modules the virtual guide vehicle display position to increase the headway distance.

In accordance with the embodiment of the present invention, the higher the speed, the larger the headway distance that is set, which is comforting to the driver, because it allows him to feel he can drive normally, since under normal driving conditions the headway distance is increased at high speeds.

In a preferred embodiment of the invention, the display modification means modifies the headway distance by changing the running speed of the virtual guide vehicle.

This makes it possible to modify the headway distance to the virtual guide vehicle without modifying the display of the virtual guide vehicle.

In a preferred embodiment of the invention, before reaching an intersection at which route guidance is to be carried out, the display modification means raises the running speed of the virtual guide vehicle to increase the headway distance.

Thus, when the vehicle is approaching an intersection where it has to turn right or left, the virtual guide vehicle accelerates to ensure the driver knows that he is nearing an intersection at which he has to make a turn.

In a preferred embodiment of the invention, when carrying out a modification to the headway distance at an intersection at which route guidance is to be carried out, the display modification means accompanies notification of the modification in the headway distance.

In accordance with the embodiment of the present invention, when the virtual guide vehicle accelerates toward the intersection at which route guidance is to be carried out, the display mode is changed, for example a winker flashes, to let the driver know the virtual guide vehicle is doing that, enabling the driver to follow without feeling confused.

In a preferred embodiment of the invention, before reaching an intersection at which route guidance is to be carried out the display modification means raises the running speed of the virtual guide vehicle to gradually increase the headway distance to more than the predetermined distance and, when the virtual guide vehicle reaches the intersection, decreases the running speed of the virtual guide vehicle to reduce the headway distance to less than the predetermined headway distance.

Thus, when approaching an intersection at which a right or left turn is required, the virtual guide vehicle accelerates ahead to the intersection and waits until the vehicle being guided reaches there, thereby making sure that the driver is aware that this is an intersection at which he has to make a turn.

In a preferred embodiment of the invention, directly before reaching an intersection at which route guidance is to be carried out the display modification means decreases the running speed of the virtual guide vehicle to reduce the headway distance until the headway distance is less than the predetermined headway distance.

Thus, the virtual guide vehicle decelerates just before the intersection and waits for the guided vehicle, thereby making sure that the driver is aware that it is an intersection at which he has to make a turn.

In a preferred embodiment of the invention, when carrying out a modification to the headway distance at an intersection at which route guidance is to be carried out, the display modification means accompanies notification of a modification in the virtual guide vehicle display mode and headway distance.

In a preferred embodiment of the invention, at an intersection at which route guidance is to be carried out, the display modification means temporarily halts the virtual guide vehicle, reducing the headway distance.

Thus, the virtual guide vehicle stops just before the intersection and waits for the guided vehicle, thereby making sure that the driver is aware that it is an intersection at which he has to make a turn.

In a preferred embodiment of the invention, when a driver cannot see a route after turning left or right at an intersection, the display modification means temporarily halts the virtual guide vehicle at the intersection.

In accordance with the embodiment of the present invention, when the intersection is one where it is difficult to see ahead after making a turn, the virtual guide vehicle halts at the intersection and waits for the guided vehicle, enabling the driver to make the turn at the intersection without concern.

In a preferred embodiment of the invention, when the vehicle passes through an intersection at which route guidance is to be carried out, the display modification means decreases the running speed of the virtual guide vehicle, decreasing the headway distance.

In accordance with the embodiment of the present invention, the virtual guide vehicle slows just before the guided vehicle passes through the intersection, enabling the driver to turn at the intersection without concern.

In a preferred embodiment of the invention, when the driver can see the route after making a turn at an intersection, the display modification means decreases the running speed of the virtual guide vehicle to decrease the headway distance as the virtual guide vehicle turns left or right at the intersection.

In accordance with the embodiment of the present invention, when the intersection is one where the route after making the turn can be seen, the driver can make the turn by following the virtual guide vehicle.

In a preferred embodiment of the invention, at an intersection at which route guidance is to be carried out, the display modification means decreases the running speed of the virtual guide vehicle to decrease the headway distance while turning the virtual guide vehicle left or right at the intersection, after which the running speed of the virtual guide vehicle is further decreased to further decrease the headway distance.

In accordance with the embodiment of the present invention, after the virtual guide vehicle has slowly turned at an intersection at which a left or right turn is to be made, it runs at a low speed while waiting for the guided vehicle, allowing the driver to turn without haste.

In a preferred embodiment of the invention, the display modification means decreases the headway distance by an amount corresponding to the magnitude of curvature of the road on which the vehicle is running.

This prevents the driver being unsettled by losing sight of a vehicle ahead because of a bend.

In a preferred embodiment of the invention, when there is a blind curve, the display modification means reduces the headway distance by lowering the running speed of the virtual guide vehicle, and then maintains that headway distance.

This ensures that the virtual guide vehicle is displayed at an appropriate position, even when going along a curve in the road.

In a preferred embodiment of the invention, on mountain roads, the display modification means does not carry out control to reduce the headway distance, even when there is a blind curve.

In accordance with the embodiment of the present invention, the headway distance to the virtual guide vehicle is not decreased on roads on which route guidance is not required due to an almost total absence of forks or the like, and on mountain roads on which the virtual guide vehicle is displayed right in front of the guided vehicle due to the presence of blind curves, since the virtual guide vehicle is already displayed right in front of the guided vehicle, so a further decrease in the headway distance would be unsettling for the driver. Because the headway distance is not decreased, in the case of blind curves, it is preferable to display the virtual guide vehicle as if it is disappearing on the far side of the curve.

In a preferred embodiment of the invention, the apparatus further comprises preceding vehicle detection means for detecting a preceding vehicle and the distance to the preceding vehicle, wherein when a preceding vehicle is detected the display modification means displays the virtual guide vehicle between the guided vehicle and the preceding vehicle.

This prevents the driver being unsettled by seeing the virtual guide vehicle superimposed on the vehicle ahead.

The above objects are also attained according to the present invention by providing a route guidance method for guiding a vehicle to a set destination, comprising the steps of superimposing a virtual guide vehicle that guides the vehicle to the destination on an actual landscape being viewed by the vehicle driver, and modifying a display position and/or a display mode of the virtual guide vehicle based on a predetermined condition.

In a preferred embodiment of the invention, in the virtual guide vehicle display step, the virtual guide vehicle is displayed running at a predetermined headway distance corresponding to the speed of the vehicle, and in the display modification step, as the speed of the vehicle increases, the virtual guide vehicle display position is modified to increase the headway distance.

The above objects are also attained according to the present invention by providing a route guidance program for a computer that guides a vehicle to a set destination, the program controlling the computer to display a virtual guide vehicle running ahead of the vehicle to guide the vehicle to the destination superimposed on an actual landscape being viewed by a driver of the vehicle, and to modify a display position and/or a display mode of the virtual guide vehicle based on a predetermined condition.

In a preferred embodiment of the invention, the virtual guide vehicle is displayed running at a predetermined headway distance corresponding to the speed of the vehicle, and the display position of the virtual guide vehicle is modified to increase said headway distance as the speed of the vehicle increases.

The above and other objects and features of the present invention will be apparent from the following description made with reference to the accompanying drawings showing preferred embodiments of the invention.

### BRIEF DESCRIPTION OF THE DRAWINGS

In the accompanying drawings:
Figure 1 is a block diagram of a route guidance apparatus according to a preferred embodiment of the present invention;
Figure 2 is a block diagram of the contents of a hard disk drive (HDD) storage device of the route guidance apparatus according to the embodiment of the present invention;
Figure 3 shows the area around the driver's seat of a vehicle equipped with a route guidance apparatus according to the embodiment of the present invention;
Figure 4 is a flowchart of the basic control operation process of the route guidance apparatus according to the embodiment of the present invention;
Figure 5 shows the initial settings (1) screen used when making the initial settings of the route guidance apparatus of the embodiment of the present invention;
Figure 6 shows the initial settings (2) screen used when making the initial settings of the route guidance apparatus of the embodiment of the present invention;
Figure 7 shows an actual landscape seen by a driver through the windshield of a vehicle;
Figure 8 shows an actual landscape that includes an image of a virtual guide vehicle, as seen by a driver through the windshield of a vehicle;
Figure 9 is an explanatory drawing of the virtual guide vehicle;
Figure 10 is a flowchart of the process of calculating a guide car display position and display mode carried out by the route guidance apparatus according to the embodiment of the present invention;
Figure 11 is a graph of the transmissivity modification rate used in the calculation of guide car display position and display mode of Figure 10;
Figure 12 is a graph of the reduction modification rate used in the calculation of guide car display position and display mode of Figure 10;
Figure 13 is a flowchart of the process of calculating the basic headway distance carried out by the procedure of Figure 10;
Figure 14 is a map for setting headway distance Lv;
Figure 15 is a flowchart of the process of corrected control of the basic headway distance carried out by the procedure of Figure 10;
Figure 16 shows an example of a display of a virtual guide vehicle turning left at an intersection;
Figure 17 shows an example of a display of a virtual guide vehicle turning right at an intersection;
Figure 18 shows an example of a display when there is a relatively distant preceding vehicle;
Figure 19 shows an example of a display when there is a relatively close preceding vehicle;
Figure 20 shows an example of a display of a virtual guide vehicle on a blind curve;
Figure 21 shows an example of a display of a virtual guide vehicle on a blind curve;
Figure 22 shows an example of a display of a virtual guide vehicle on a blind curve;
Figure 23 is a flowchart of the process of calculating a virtual guide vehicle display mode carried out by the procedure of Figure 10;
Figure 24 is a graph showing the relationship between the guided vehicle speed and the transmissivity of the virtual guide vehicle;
Figure 25 is a graph showing the relationship between the guided vehicle speed and the size of the virtual guide vehicle;
Figure 26 is a drawing of a landscape that includes an obstruction and a virtual guide vehicle, as seen by a driver through the windshield of a vehicle;
Figure 27 is a drawing of a landscape that includes an obstruction and a virtual guide vehicle, as seen by a driver through the windshield of a vehicle;
Figure 28 is a drawing of a landscape that includes a road mark and a virtual guide vehicle, as seen by a driver through the windshield of a vehicle;
Figure 29 is a drawing of a landscape that includes a road mark and a virtual guide vehicle, as seen by a driver through the windshield of a vehicle;
Figure 30 is a drawing of a landscape that includes an obstruction and a virtual guide vehicle, as seen by a driver through the windshield of a vehicle;
Figure 31 is a drawing of a landscape that includes a preceding vehicle and a virtual guide vehicle, as seen by a driver through the windshield of a vehicle;
Figure 32 is a drawing of a landscape that includes an obstruction and a virtual guide vehicle, as seen by a driver through the windshield of a vehicle;
Figure 33 is a drawing of a landscape that includes an obstruction and a virtual guide vehicle, as seen by a driver through the windshield of a vehicle; and
Figure 34 is a drawing of a landscape that includes an obstruction and a virtual guide vehicle, as seen by a driver through the windshield of a vehicle.

### DETAILED DESCRIPTION OF THE PREFERRED EMBODIMENT

Preferred embodiments of the present invention will now be described with reference to the drawings.

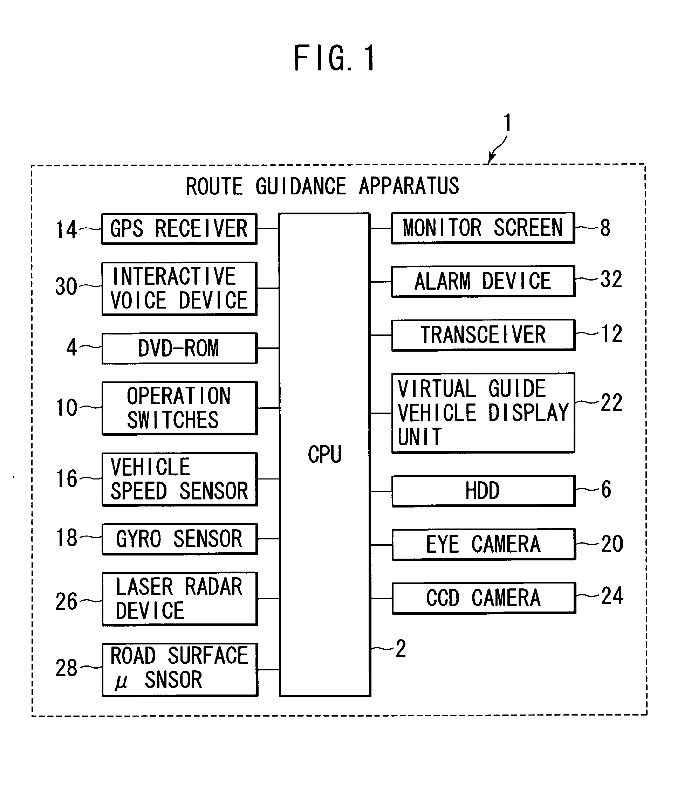

Figure 1 is a block diagram showing the configuration of a route guidance apparatus according to an embodiment of the invention. This route guidance apparatus supports the driving of a vehicle by displaying an image of a virtual guide vehicle superimposed on an actual landscape and providing the driver with route information.

In Figure 1, reference numeral 1 denotes a route guidance apparatus mounted in a vehicle. The route guidance apparatus 1 includes a CPU 2 that route information to a set destination and carries out navigation functions that assist the driver.

The route guidance apparatus 1 also has a DVD-ROM 4 containing the main map information and information on buildings, a hard disk drive (HDD) 6 for storing detailed map information and images relating to the virtual guide vehicle, a monitor screen 8 for displaying map and other information, and operation switches 10 for setting destinations.

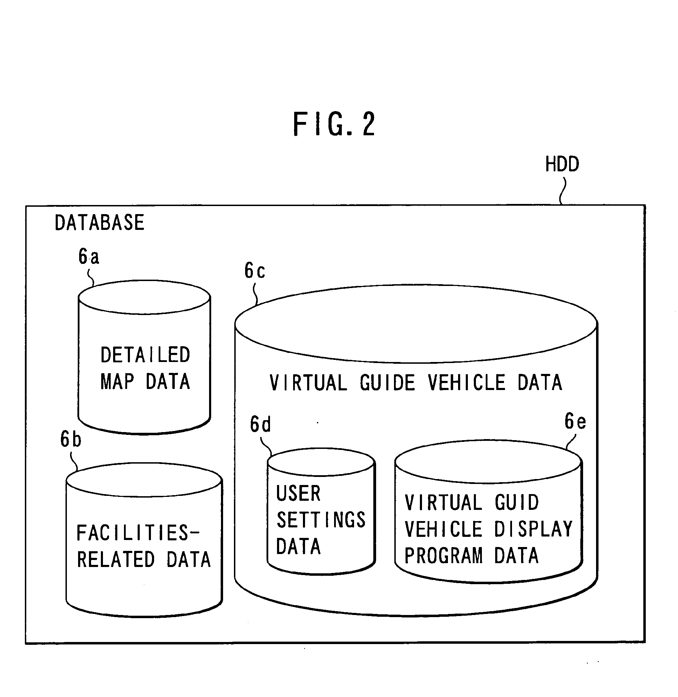

As shown in Figure 2, stored on the HDD 6 are detailed map data 6a, data 6b relating to facilities on the maps, and data 6c relating to the virtual guide vehicle. The virtual guide vehicle data 6c includes user settings data 6d in which are stored items set by a user relating to the display of the virtual guide vehicle, and virtual guide vehicle display program data 6e for the program used to display the virtual guide vehicle.

The route guidance apparatus 1 includes a transceiver 12 that can communicate with an off-vehicle information center (not shown) via the Internet to receive various information including the latest map information, detailed information on roads in the area and information relating to virtual guide vehicle images. Information received by the transceiver 12 is stored on the HDD 6.

The route guidance apparatus 1 is also equipped with a GPS receiver 14 for detecting the present position of the vehicle, a vehicle speed sensor 16 and a gyro sensor 18. The apparatus 1 also has an eye camera 20, a virtual guide vehicle display unit 22 and a CCD camera 24 for detecting the position and line of sight of the driver's eyes and using this information to display an image of the virtual guide vehicle on the actual landscape being viewed by the driver.

The eye camera 20 is used to image the pupils of people in the vehicle to detect the position and line of sight of the pupils and the distance to an object being viewed. Techniques that can be applied for the eye camera to accomplish this include the electro-oculographic (EOG) method, the photo-electric element EOG (P-EOG) method, the corneal reflex method, the first and fourth Purkinje image detection method, the contact lens method, the searchcoil method and the infrared fundus camera method.

Under the control of the CPU 2, based on the position of the driver's pupils and the current location and direction of the vehicle, using a method such as holography, the virtual guide vehicle display unit 22 displays an image of the virtual guide vehicle within the actual landscape seen by the driver through the windshield. To the driver, it appears that the virtual guide vehicle is running from several meters to several tens of meters ahead of his vehicle.

The CCD camera 24, which is attached in a preceding-facing position at the upper part of the vehicle, images the landscape ahead of the vehicle. The image data thus obtained is used to detect other vehicles running in front, the flashing of such vehicles winkers and of their brake-lights, parked vehicles, various obstructions on the road, curves, car lanes, signals, intersections, road signs, road markings, pedestrians, and weather conditions including the external light level, mist and fog conditions and visibility.

The route guidance apparatus 1 is also equipped with a laser radar device 26 and a road surface µ sensor 28. The laser radar device 26 is affixed at the front end of the vehicle, facing ahead. The laser radar device 26 detects preceding vehicles, obstructions and the like on the road, as well as the relative distance to a preceding vehicle and relative speeds. The road surface µ sensor 28 detects the road surface condition and the coefficient of friction of the surface.

The route guidance apparatus 1 is also equipped with an interactive voice device 30. The interactive voice device 30 is equipped with a loudspeaker 30a and a microphone 30b, and can provide the driver with spoken information and receive spoken instructions from the driver. The route guidance apparatus 1 also has an alarm device 32 that warns the driver when it is necessary to brake to slow the vehicle.

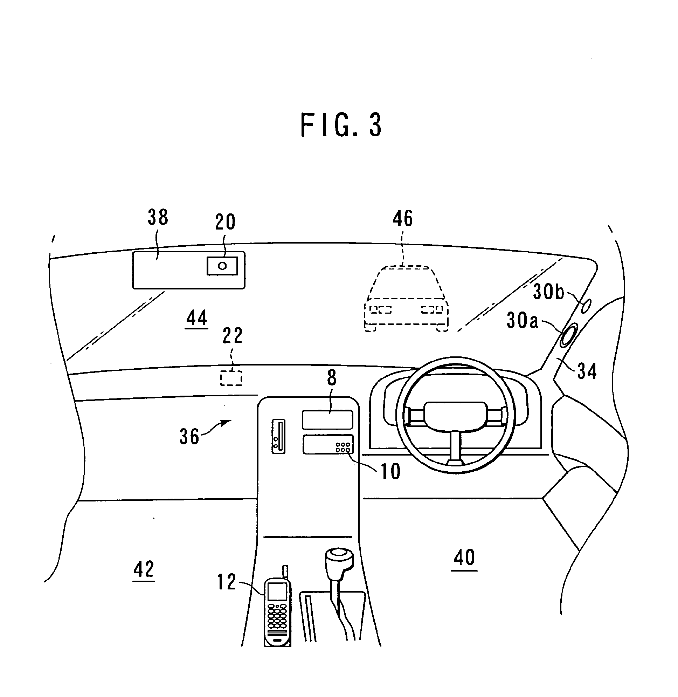

Figure 3 shows the area around the driver's seat of a vehicle equipped with the route guidance apparatus according to the embodiment of the invention. As shown in Figure 3, the loudspeaker 30a and microphone 30b are affixed to the A-pillar 34 near the driver's seat.

The operation switches 10 are provided on an instrument panel 36; a monitor screen 8 is located near the operation switches 10. The eye camera 20 is incorporated in the cabin room mirror 38. The transceiver 12 is provided between the driver's seat 40 and the front passenger's seat 42. The virtual guide vehicle display unit 22 is affixed to the top part of the instrument panel 36.

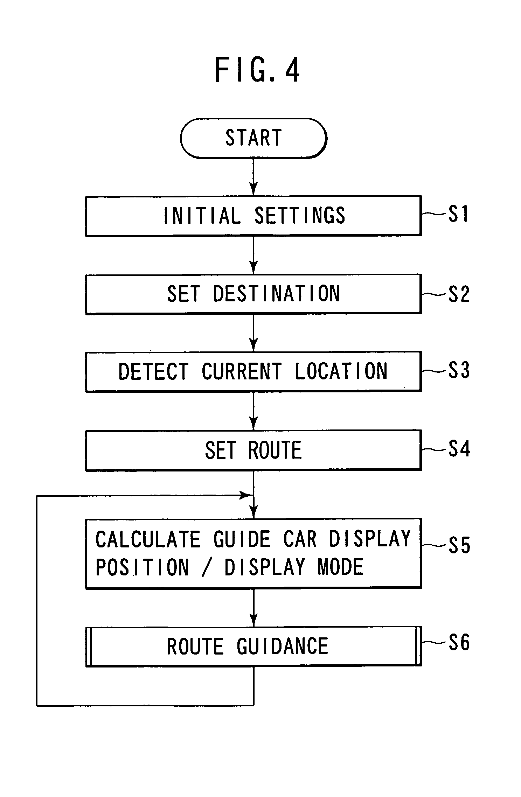

The basic operation of the route guidance apparatus 1 will now be described with reference to Figure 4, which is a flowchart of the basic control operation process of the route guidance apparatus 1. In Figure 4, "S" denotes "step."

In S1, the initial settings of the route guidance apparatus 1 are input. To do this, the driver operates the switches 10 in accordance with the display on the monitor screen 8. Details of the initial settings are described later.

Next, the process advances to S2, the destination is set, and in S3 the current location of the vehicle is detected. In S4, the route that should be taken to get from the current position to the destination is set, based on map data stored on the DVD-ROM 4 and the HDD 6. Then, in S5, the virtual guide vehicle display position and display mode are calculated, based on the initial settings and the like. Next, the process moves to S6, and route guidance to enable the vehicle to take the route it should is implemented.

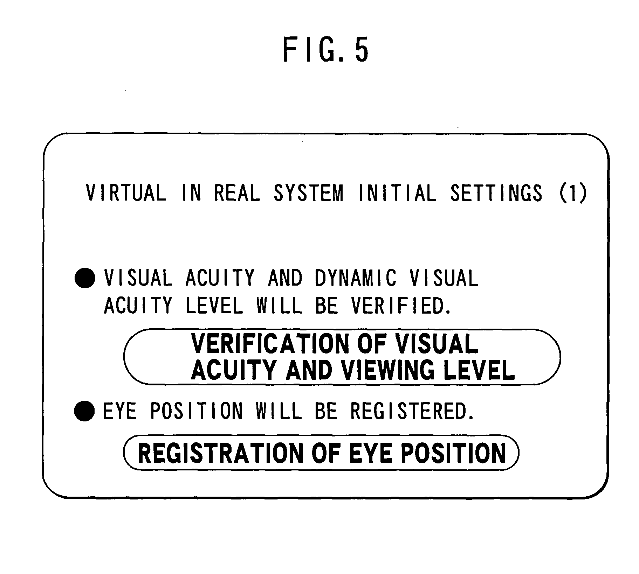

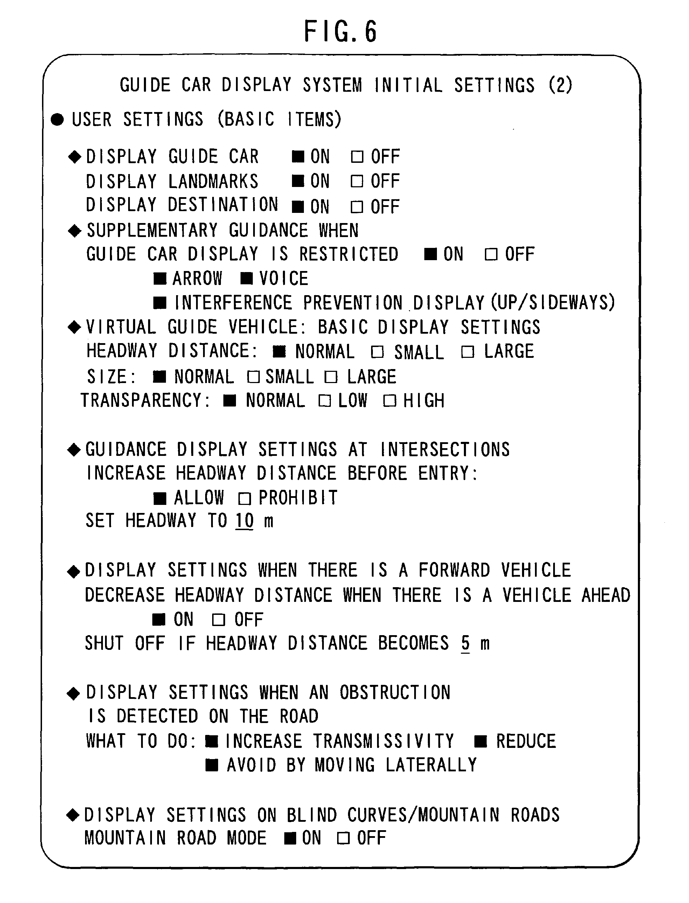

Next, Figures 5 and 6 will be used to explain initial settings of the route guidance apparatus of this embodiment. Figures 5 and 6 show monitor screens used when making the initial settings. Figure 5 shows the initial settings (1) displayed on the monitor screen 8 for verification and registration relating to visual acuity. When "Verification of visual acuity and viewing level" is selected, a screen is displayed (not shown) for testing visual acuity and dynamic visual acuity. The user's visual acuity is tested and the results are recorded on the HDD 6.

Next, when "Eye position registration" is selected, the user's pupillary position when sitting in the driver's seat is calculated based on image data obtained from the eye camera 20, and recorded on the HDD 6. The system may also be configured to estimate the driver's eye position based on the position of the driver's seat, the angle of the room mirror, and so forth.

Next, the initial settings (2) screen shown in Figure 6 is displayed on the monitor screen 8. On the initial settings (2) screen, first, ON or OFF is selected for the "Display guide car" item to set whether or not an image of the virtual guide vehicle is displayed. If OFF is selected, there will be no route guidance by virtual guide vehicle; if ON is selected, navigation to the set destination will be assisted by showing a virtual image of a virtual guide vehicle displayed on the landscape ahead of the vehicle. Namely, the virtual guide vehicle is displayed on the location that is closer than the actual landscape from the occupant.

More specifically, based on the set route, the map data and the present location of the vehicle, the route guidance direction from the present location of the vehicle is provided, and the moving direction of the vehicle is detected. Based on the route guidance direction from the present location of the vehicle and the moving direction of the vehicle, the route guidance direction against the moving direction of the vehicle is determined. Then the eye position of the occupant is detected, and finally the virtual guide vehicle is displayed on the straight line extending from the eye position to the location of the virtual guide vehicle.

Similarly, ON or OFF is selected for "Display landmarks" to set whether or not to display virtual landmarks for route guidance superimposed on the actual landscape. If ON is selected, during the course of providing route guidance for navigating the vehicle, if, for example, there is a gas station on the corner of an intersection where the vehicle should turn left, a virtual image of the gas station will be superimposed on the gas station to indicate that the driver should make a left turn at that corner. If OFF is selected, there will be no such display.

"Display destination" ON or OFF is selected to set whether or not the system shows a virtual display of the destination superimposed on the actual landscape. If ON is selected, when nearing the destination, a virtual image of an arrow pointing to the destination will be superimposed on the actual landscape to indicate the destination location to the driver. If OFF is selected, there will be no such display.

Next, "Supplementary guidance when guide car display is restricted" is used to set whether or not supplementary guidance is provided when displaying a guide car is restricted. In the case of the route guidance apparatus of this embodiment, under predetermined conditions the guide car display is stopped or otherwise restricted. In such cases, this item controls whether or not supplementary voice guidance or the like is provided. Thus, such supplementary guidance (detailed below) will be provided if ON is selected, and not provided if OFF is selected.

When ON is selected, at least one of the items "Arrow," "Voice" and "Interference prevention display." If "Arrow" is selected, when display of the guide car is being restricted, virtual arrow images will be used indicating the direction to take with respect to the actual landscape the driver is looking at. If "Voice" is selected, at such times voice guidance will be provided, such as "Turn right at the next intersection."

The item "Interference prevention display" determines whether or not the virtual guide vehicle display mode is modified to prevent interference when such interference seems likely, such as from an obstruction on the shoulder. In this embodiment, such modification includes changing the display position, size and transmissivity. Here, to prevent such interference, there are options to move the virtual guide vehicle display position up or sideways. When "Interference prevention display" ON is selected, and "Sideways," when it appears that an obstruction on the shoulder, for example, will interfere with the virtual guide vehicle, the display position of the virtual guide vehicle will be moved sideways to avoid such interference.

The "Virtual guide vehicle: basic display settings" item is used to make the basic display mode settings for the virtual guide vehicle. "Headway distance" is used to set how far ahead the virtual guide vehicle is displayed, "Size" is used to set the size of the virtual guide vehicle, and "Transmissivity" is used to set the transparency level at which the virtual guide vehicle and the like are displayed. The options for each of the first two item are "Normal" "Small" and "Large," and "Normal" "Low" and "High" for the third item.

When route guidance apparatus of this embodiment is equipped with a function whereby, when nearing an intersection at which the vehicle is to turn left or right, the virtual guide vehicle reaches the intersection first and then stops, to thereby provide the driver with an early visual indication of where the intersection location. First, the "Guidance display settings at intersections" item is used to set whether or not to increase the displayed headway distance to the virtual guide vehicle, sending the virtual guide vehicle ahead when approaching such an intersection.

This embodiment also uses a configuration whereby when the guided vehicle is approaching an intersection at which the driver has to make a turn left or right, and the headway distance to the virtual guide vehicle that has already reached the intersection decreases to less than the predetermined distance, the virtual guide vehicle starts running again and makes the required turn.

Next, the item "Display settings when there is a preceding vehicle" is used to set the virtual guide vehicle display mode when there is a vehicle ahead. First, ON or OFF is selected for "Decrease headway distance when there is a vehicle ahead." If ON is selected, the virtual guide vehicle will be displayed closer to the guided vehicle to prevent the virtual guide vehicle being superimposed on the preceding vehicle. When OFF is selected, the display position is not changed, which can therefore result in the virtual guide vehicle being displayed superimposed on a preceding vehicle.

The item "Shut off if headway distance becomes ___ m" is used to set the headway distance to the preceding vehicle at which the display of the virtual guide vehicle is stopped. The default headway distance is 5 meters.

Next, the item "Display settings when an obstruction is detected on the road" is used to set how the virtual guide vehicle display is modified when an obstruction is detected, such as a car parked on the shoulder. This is handled by selecting at least one of the options "Increase transmissivity," "Reduce" and "Avoid by moving laterally."

In this embodiment, the headway distance to the virtual guide vehicle is limited to how far the driver can see. When entering a blind curve, the virtual guide vehicle is halted at the beginning of the curve, decreasing the headway distance, which can be unsettling for the driver. On the other hand, on mountain roads where there are few forks and therefore little route guidance, it is not necessary to always display the virtual guide vehicle. For such cases, under "Display settings on blind curves/mountain roads," the system provides the option of selecting ON or OFF for the "Mountain road mode" in which the headway distance to the virtual guide vehicle is not decreased even in the case of blind curves.

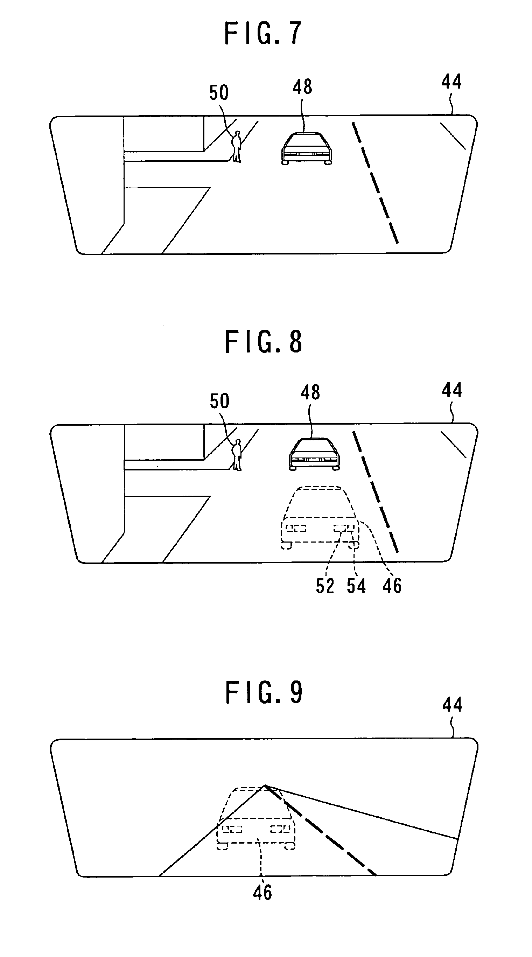

Figure 7 shows an actual landscape seen by a driver through the windshield of the vehicle, and Figure 8 shows an actual landscape that includes an image of a virtual guide vehicle, as seen by a driver looking through the windshield. When in fact there are a preceding vehicle 48 and a pedestrian 50 in the actual landscape seen through the windshield 44, as shown in Figure 7, and route guidance is provided with the "Display guide car" option ON, as shown in Figure 8, the virtual guide vehicle 46 will appear to be running several meters in front of the guided vehicle, superimposed on the actual landscape that in this case includes the preceding vehicle 48 and pedestrian 50. As is also shown in Figure 8, the image of the virtual guide vehicle 46 includes brake-lights 52 that light when the virtual guide vehicle 46 decelerates, and winkers 54 that flash when the virtual guide vehicle 46 turns left or right.

In this embodiment, the image of the virtual guide vehicle 46 is displayed within the actual landscape being viewed by the driver. The route along which the virtual guide vehicle 46 is running is the route to the set destination, and the brake-lights 52 and winkers 54 also flash. Therefore, the driver can be guided along the required route to the destination by following the virtual guide vehicle 46.

Figure 9 is a schematic representation of the virtual guide vehicle 46 displayed in a semi-transparent state. The transmissivity of the virtual guide vehicle 46 is usually that set in the "Transmissivity" part of the "Virtual guide vehicle: basic display settings" item of the initial settings (2). However, there are cases in which the transmissivity of all or part of the image is increased, such as when an obstruction is detected.

In the case of the route guidance apparatus of this embodiment, when there is an obstruction that should be seen but is not because it is hidden by the virtual guide vehicle, the virtual guide vehicle display position and display mode are modified to enable the driver to see the obstruction. The route guidance apparatus may also be configured to modify the virtual guide vehicle display position in accordance with the vehicle speed or the like.

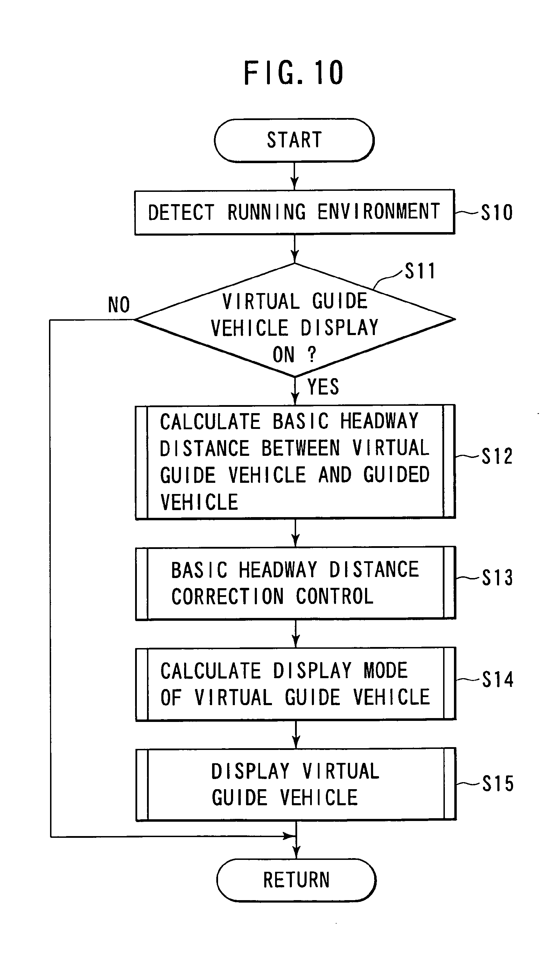

Setting and modifying the basic display position and display mode of the virtual guide vehicle are done by "Calculating guide car display position and display mode" in S5 in the flowchart of Figure 4. The calculation of S5 will now be explained with reference to the flowchart of Figure 10.

First, the running environment is detected in S10. The running environment comprises the various states. Specifically, these include the road conditions ahead of the vehicle as detected by the CCD camera 24, the relative distance and relative speed with respect to obstructions and cars ahead detected by the laser radar device 26, and the running speed and the rate of acceleration or deceleration of the vehicle.

In S11, it is determined whether or not guide car display has been set ON. If it is, the answer in S11 is YES, and the process moves on to S12. In S 12, the headway distance to the virtual guide vehicle is set, thereby becoming the basic headway distance. This headway distance is calculated based on what has been selected in the "Headway distance" item of the "Virtual guide vehicle: basic display settings" item of the initial settings (2) shown in Figure 6. The specific calculation method is described later.

The process then moves to S13, where corrected control of the basic headway distance calculated in S 12 is carried out. This is done to ensure secure route guidance by the virtual guide vehicle without unsettling the driver, when the vehicle is nearing an intersection at which it has to make a left or right turn and there is a car ahead, or when running on a blind curve. Details of the corrected control are described later.

The process then moves to S14, in which the virtual guide vehicle display mode is calculated. The virtual guide vehicle is semi-transparent; this mode calculation is done when the display mode needs to be changed, for example when it is necessary to ensure that an obstruction that should be seen by the driver is in fact seen by him. Details of this display mode calculation are described later.

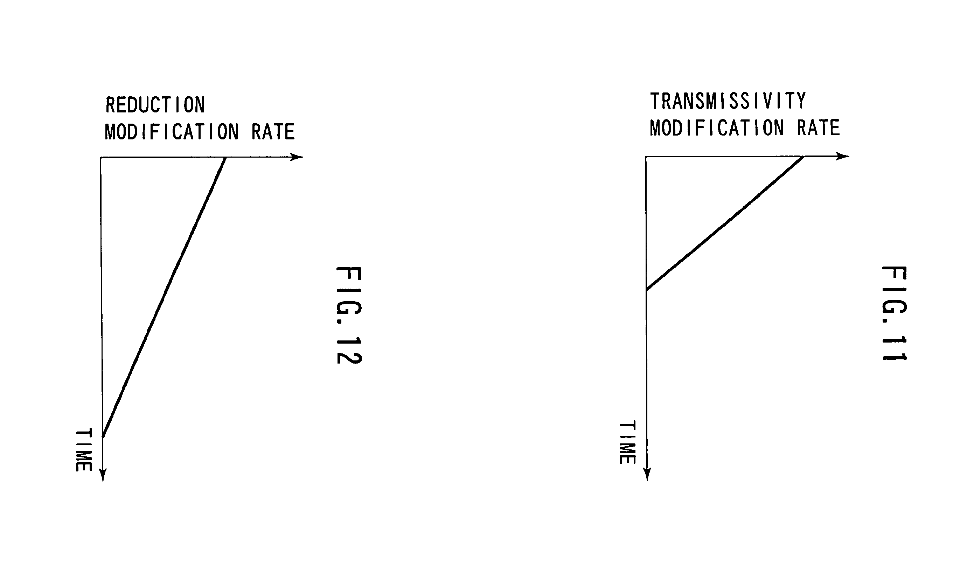

As the changes to the virtual guide vehicle display mode made in the case of this embodiment, the size of the virtual guide vehicle is reduced and its transmissivity is increased (making the virtual guide vehicle image more transparent). As shown in Figures 11 and 12, the transmissivity is set to have a faster rate of change than the rate at which the size is reduced. As a result, when the reduction and increase in transmissivity of the virtual guide vehicle are carried out at the same time, the more transparent image of the virtual guide vehicle seems to be contracting, so even though the image of the virtual guide vehicle is reduced, it does not really have an unsettling effect on the driver.

Finally, in S15, the virtual guide vehicle is displayed. When changes are set to be made to the display position and display mode, the changes are carried out at a suitable timing. In this embodiment, the virtual guide vehicle is set to be continuously displayed for a predetermined time to prevent the driver being unsettled by frequent changes to the display status.

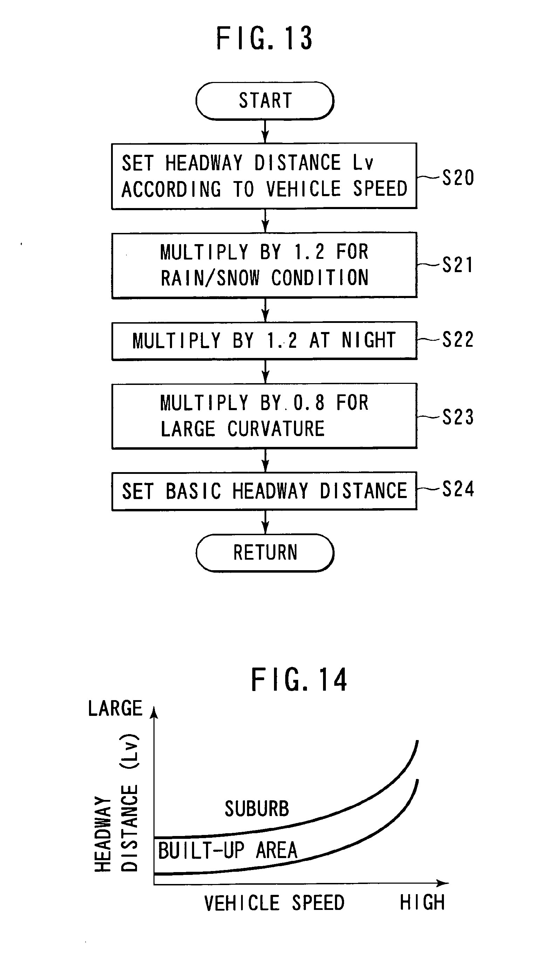

Next, the process of calculating the basic headway distance carried out in S 12 of the flowchart of Figure 10 will now be explained with reference to Figure 13, which is a flowchart of the process of calculating the basic headway distance.

When the calculating process is started, first, in S20, headway distance Lv is set according to the vehicle speed. Lv is set by retrieving the value corresponding to the vehicle speed from the map shown in Figure 14. As shown in Figure 14, the higher the speed of the vehicle, the larger the value at which Lv is set. Also, there are different values for suburban and built-up areas. Whether an area is a suburban area or a built-up area is determined on the basis of the location of the vehicle and the map data.

Next, in S21, headway distance Lv is corrected in accordance with the surface condition of the road. In the case of a low µ, such as in the case of rain or snow, the headway distance is increased by applying a correction factor of 1.2. When the vehicle is running at night, in S22, the headway distance is increased by applying a correction factor of 1.2 to the value corrected in S21.

When the vehicle is driving on a curve with a curvature that is more than a predetermined value, the headway distance is decreased by applying a correction factor of 0.8 to the value corrected in S22. This is done to ensure that the driver can recognize the virtual guide vehicle. The curvature of any curve encountered along the route is determined based on the map data. A configuration may be used wherein the headway distance to the virtual guide vehicle is decreased by using a correction factor that becomes smaller as the curvature of the curve increases. Finally, in S24, the corrected value is set as the basic headway distance L.

Next, the corrected control of the basic headway distance effected in S 13 of the flowchart of Figure 10 will now be explained with reference to Figure 13, which is a flowchart of said process of applying corrected control to the basic headway distance.

First, the running environment is detected in S30. The running environment comprise the various states. Specifically, these include the road conditions ahead of the vehicle as detected by the CCD camera 24, the relative distance and relative speed with respect to obstructions and cars ahead detected by the laser radar device 26, and the running speed and the rate of acceleration or deceleration of the vehicle.

Next, the process moves to S31, where it is determined whether or not conditions for correcting the basic headway distance L apply. In the case of this embodiment, there are three such conditions: the vehicle is approaching an intersection at which it will be guided to turn right or left; there is a car ahead; the vehicle is about to go around a blind curve. If any of these conditions exists, the basic headway distance L has to be corrected, so the process advances to S32 onward to carry out the correction procedure. If none of these conditions applies, the basic headway distance L does not have to be corrected, so the process returns. A blind curve means one on which the way ahead cannot be seen beyond a distance that is the same as the basic headway distance L.

Next, in S32 it is determined which of the above three conditions apply. If the vehicle is approaching a predetermined intersection, the process moves to S33; if there is a car ahead, the process moves to S34; if there is a blind curve, the process moves to S35. This is also the order in which the conditions are prioritized. If two or more conditions apply simultaneously, the condition having the higher priority is processed first. Therefore, if for example the "intersection" and "car ahead" conditions both apply, the process gives priority to "intersection" and moves to S33.

In S33, it is determined whether or not the intersection concerned can be seen. This determination is based on map data and other data such as the driver's line of sight detected by the eye camera 20. If the determination in S33 is YES, the process moves on to S36, and the system notifies the driver by voice or the like. that the headway distance to the virtual guide vehicle approaching the intersection is being reduced. This is done to prevent the driver being shaken by the virtual guide vehicle suddenly speeding up and moving away.

Next, the process moves to S37 and a display mode is set whereby the virtual guide vehicle is accelerated to move it ahead to the intersection, where it is then stopped at the turn to show the driver where to turn. In this mode, at the turn, the headway distance between the vehicle and the virtual guide vehicle is reduced. In this embodiment, when the virtual guide vehicle 46 speeds up to the intersection, its winker 54 flashes to indicate the direction in which the vehicle should turn. Having the virtual guide vehicle go on ahead opens up the field of view and provides an early indication of where the vehicle is to make the turn.

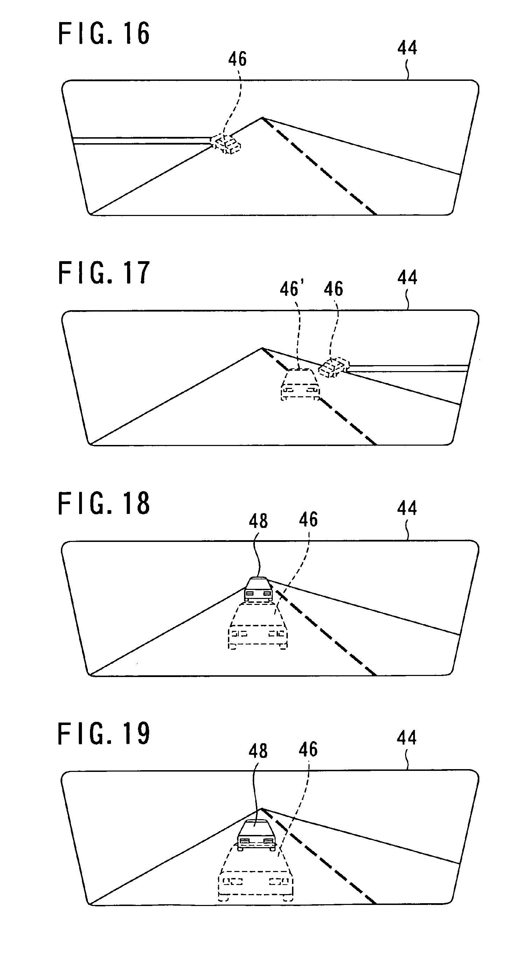

Figure 16 shows the virtual guide vehicle 46 displayed making a left turn at the intersection. The system can be configured so that, as shown in Figure 17, the virtual guide vehicle 46' stops at a position from which a right turn is started, after which, after the elapse of a predetermined time, or when the vehicle reaches a predetermined position, the virtual guide vehicle 46 is advanced into the turning.

The process then moves to S38, where it is determined whether or not the distance to the intersection is a predetermined distance A or less. The distance A is the one set in the "Guidance display settings at intersections" item of initial settings (2). If the determination in S38 is NO, the determination process of S38 is repeated until it is YES, at which point the process moves to S39, which returns the headway distance to the virtual guide vehicle 46 to the basic headway distance L. This is done by running the virtual guide vehicle 46 preceding until the apparent headway distance becomes the basic headway distance L.

Instead of the procedure of S37 to S39, a display mode may be used in which, in the case of an intersection where the route after making a turn cannot be seen, the virtual guide vehicle is stopped at the corner of the turn, and in the case of an intersection at which the route can be seen after making the turn, the virtual guide vehicle makes the turn at a low speed. In that type of display mode too, the headway distance between the guided vehicle and the virtual guide vehicle is decreased at the turn.

A display mode may also be used in which the virtual guide vehicle slows down while making the turn, and is further slowed at a point at which it has passed the corner until the guided vehicle has made the turn.

If the determination in S33 is NO, it means the intersection cannot be seen, so the virtual guide vehicle cannot be used to show the driver where to turn at the intersection, so the value of flag F is set to 1 and the process returns.

When it is determined that there is a car ahead, the process moves to S34, where it is determined whether or not, in the basic headway distance L to the front of the guided vehicle, the virtual guide vehicle will interfere with the car ahead. This determination is made based on the detection results of the CCD camera 24 and the laser radar device 26.

If in S34 the determination is YES, the process moves to S41 where the headway distance between the guided vehicle and the virtual guide vehicle is corrected to have the virtual guide vehicle displayed a predetermined distance from the car ahead. As a result, as shown in Figures 18 and 19, even when the headway distance between the guided vehicle and the preceding car 48 is relatively large (Figure 18) or relatively small (Figure 19), the virtual guide vehicle 46 will be displayed between the preceding car 48 and the guided vehicle. The display size of the virtual guide vehicle may also be reduced.

Next, in S42, it is determined whether or not the headway distance between the car ahead and the guided vehicle is a predetermined distance A2 or less. This A2 is the distance set in the "Shut off if headway distance becomes _{―}m" item in the initial settings (2). If in S42 the determination is YES, it means the preceding car is very close, so in S43, the value of flag F is set to 2 and the process is returned. If the determination in S34 and S42 is YES, the process is returned.

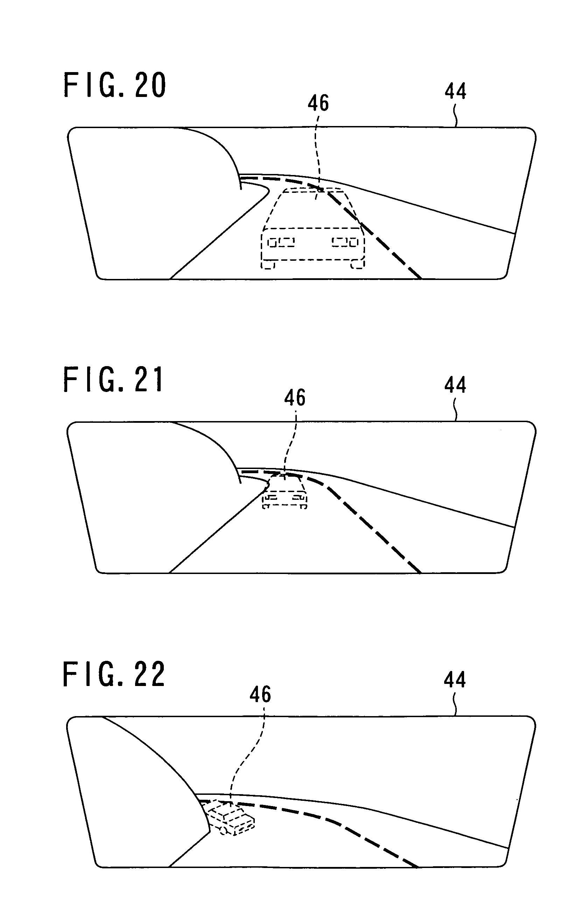

When it is determined that the vehicle is about to enter a blind curve, the process moves to S35. In S35, it is determined whether or not the vehicle is running on a mountain road. This determination is based on the location of the vehicle and map data and the like. If the determination in S35 is NO, the process moves to S44 where it is determined whether or not it is a blind curve. If the determination is YES, the process moves to S45, in which the headway distance between the virtual guide vehicle and the guided vehicle is corrected to reduce it to less than the basic headway distance L (Figure 20). If the determination in S44 is NO, the process moves to S46, in which the basic headway distance L is decreased so have the virtual guide vehicle 46 displayed at the far end of the visible road.

If the determination in S35 is YES, the process moves to S47 in which, if the running mode in initial settings (2) has been set to ON, correction to shorten the basic headway distance L is prohibited. As a result, the virtual guide vehicle 46 is displayed running ahead of the guided vehicle by the basic headway distance L. If the length of road ahead that can be seen is not greater than the basic headway distance L, it is preferable to use a display mode in which, as shown in Figure 22, the virtual guide vehicle 46 is disappearing along the mountain road or the like.

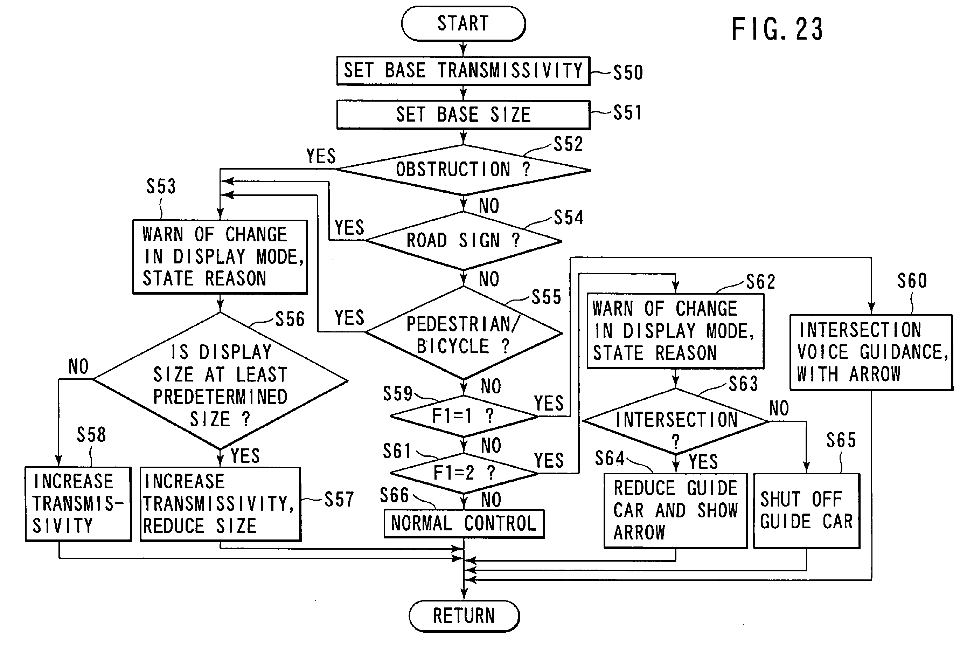

Next, the calculating of the display mode of the virtual guide vehicle in S14 by the process shown in the flowchart of Figure 10 will now be explained with reference to Figure 23. This is the process used when the options "Increase transmissivity," "Reduce" are selected in the item "Display settings when shoulder obstruction is detected" of the initial settings (2).

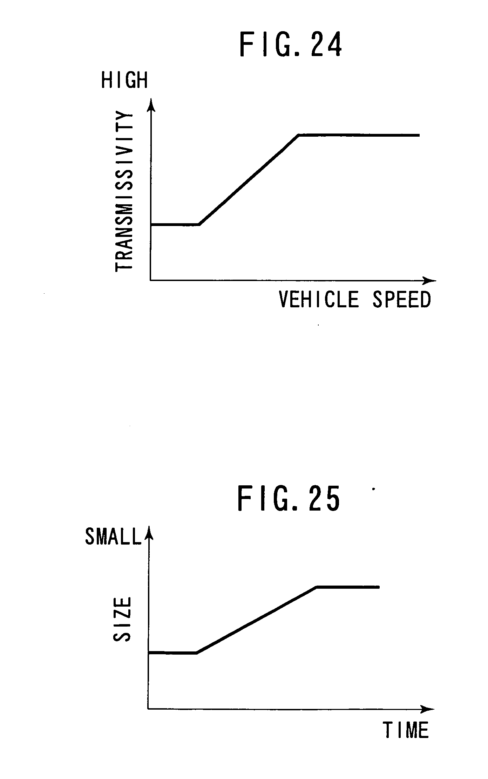

When the calculating process is started, first, in S50, the base transmissivity of the virtual guide vehicle is set. The base transmissivity is a value arrived at by applying a correction to the transmissivity set in the "Virtual guide vehicle: basic display settings" item of the initial settings (2) to increase the transmissivity by an amount corresponding to the increase in the speed of the guide vehicle, as shown by the graph of Figure 24.

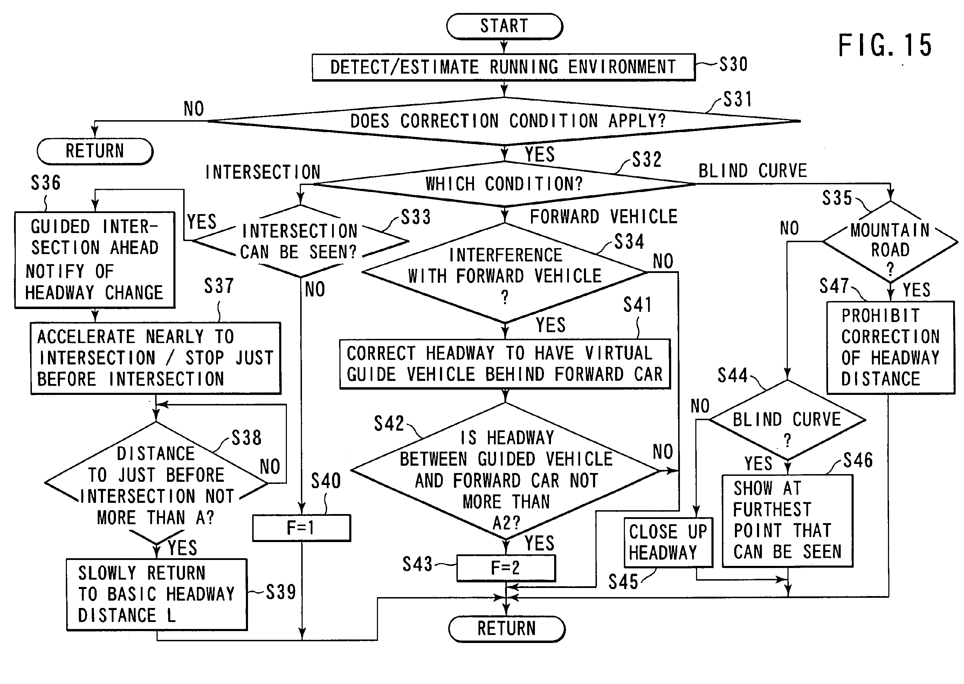

Next, the process moves to S50, in which the base size at which the virtual guide vehicle is displayed is set. This base size is attained by correcting the "Size" set in the "Virtual guide vehicle: basic display settings" item of the initial settings (2) in accordance with the headway distance (Figure 15). As shown by the graph in Figure 24, the higher the speed of the guided vehicle, the smaller the change produced by the correction. As is clear from Figures 24 and 25, a change in transmissivity is completed at a lower speed than a size change. Therefore, at the high speed end, only the size reduction is carried out, with no change to the transmissivity.

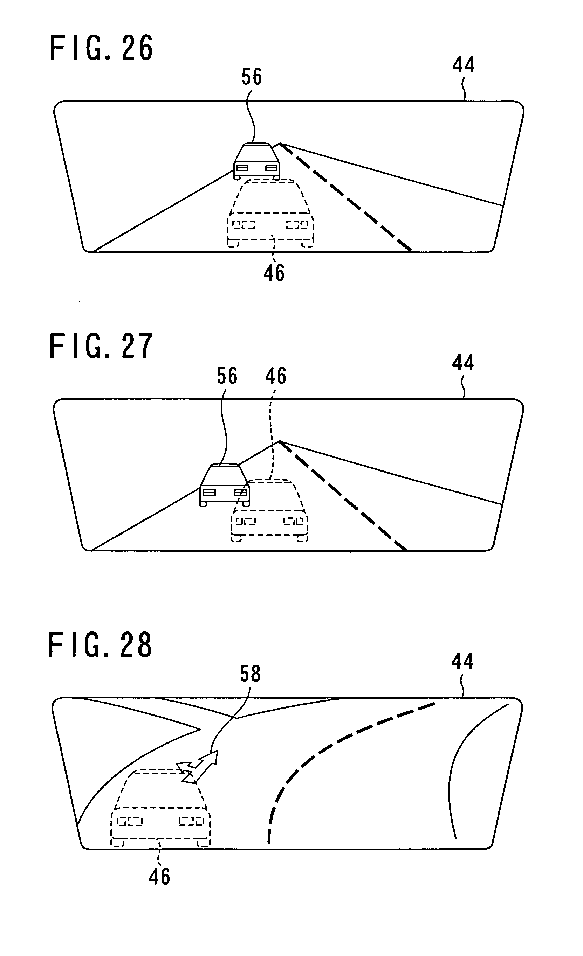

Next, in S52, it is determined whether or not there is an obstruction ahead of the guided vehicle that will interfere with the virtual guide vehicle. This determination is based on detection results obtained by the CCD camera 24 and the laser radar device 26. It may instead just be determined whether or not there is an obstruction. For example, when, as shown in Figure 26, there is a car C ahead parked on the shoulder, and there is or it is estimated that there will be, interference between the virtual guide vehicle 46 and the parked car 56, the determination in S52 will be YES.

When it is YES in S52, it means the virtual guide vehicle display mode will be modified, so in S53, the driver is informed by voice or the like of the modification of the display mode and the reason for the modification. If the determination in S52 was YES, the driver is informed that the reason is the presence of an obstruction ahead. This is done to prevent the driver being unsettled by suddenly changing the virtual guide vehicle display mode.

If the determination in S52 was NO, the process moves to S54, and it is determined whether or not there is a traffic sign ahead that will interfere with the virtual guide vehicle. This determination can be made based on the detection results of the CCD camera 24 and the laser radar device 26. If in S54 the determination is YES, in S53, the driver is informed by voice or the like of the modification to the display mode and the reason for the modification. If the determination in S54 was YES, the driver is informed that the reason is that there is a traffic sign ahead.

If the determination in S54 was NO, the process moves to S55, and it is determined whether or not there is a pedestrian or bicycle ahead that interferes with the virtual guide vehicle. This determination can also be made based on the detection results of the CCD camera 24 and the laser radar device 26. If in S55 the determination is YES, in S53, the driver is informed by voice or the like of the modification to the display mode and the reason for the modification. If the determination in S55 was YES, the driver is informed that the reason is that there is a pedestrian or bicycle.

After the completion of S53, it is determined whether or not the size of the virtual guide vehicle is at least a predetermined size. If it is smaller due to the application of corrections or the like and it is then reduced by modifying the display mode, the virtual guide vehicle becomes very small, making it hard for the driver to see it. So, this step is taken to prevent such an occurrence.

If the determination in S56 was YES, meaning the base size set in S51 is not smaller than the predetermined size, the process moves to S57, and the virtual guide vehicle display mode is modified to increase the transmissivity and reduce the size. Doing this ensures that the driver can see a car parked on the shoulder, such as the car 56 in Figure 27. To prevent the changes from unsettling the driver, the virtual guide vehicle is reduced about its center point, and the position at which the virtual guide vehicle 46 is displayed is not changed.

If the determination in S56 is NO, meaning it is smaller than the base size set in S51, the process moves to S58 and the display mode is modified to increase the transmissivity without changing the size of the virtual guide vehicle.

In S57 and S58, the display mode is changed to raise the transmissivity of the peripheral portion of the virtual guide vehicle to above the transmissivity of the center portion. That is, the image of the periphery becomes more transparent. Instead, the transmissivity of the side portions of the virtual guide vehicle can be increased, or the transmissivity of the shoulder side of the virtual guide vehicle.

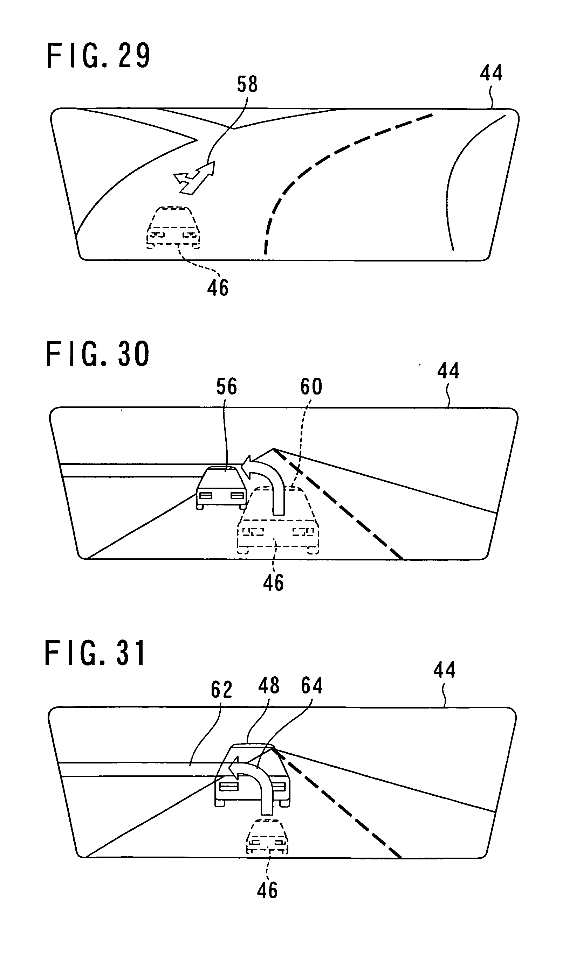

If the determination in S54 is YES, a configuration may be used in which the display mode is modified to increase the transmissivity of the entire virtual guide vehicle (Figure 28), or reduce the virtual guide vehicle (Figure 29), to ensure the driver can see road mark 58 and the like.

If the determination in S55 is NO, the process moves to S59 and it is determined whether or not the value of the flag F set in the basic headway distance correction process of S40 (Figure 15) is 1. If the determination in S59 is YES, an intersection at which the vehicle is to be guided to turn left or right cannot be seen, so the process moves to S60, the driver is informed by voice guidance that the vehicle is nearing an intersection at which the driver must make a turn, and the display mode is modified to show a virtual arrow 60 pointing to the direction in which the vehicle is to turn, superimposed on the actual landscape (Figure 30).

When the determination in S59 is NO, the process moves to S61 and it is determined whether or not the value of the flag F set in the basic headway distance correction process of S43 (Figure 15) is 2. If the determination in S61 is YES, it means a preceding car is very close to the guided vehicle, so the virtual guide vehicle display mode is modified. For this, the process moves to S62 the driver is informed by voice or the like of the modification of the display mode and the reason for the modification.

Next, the process moves to S63 and it is determined whether or not an intersection at which the vehicle is to be provided with route guidance is within a predetermined distance. If YES, since it is possible that the preceding vehicle 48 close ahead can prevent the driver seeing where he has to turn and the roads in the vicinity, as shown in Figure 31, the virtual guide vehicle 46 is displayed at a reduced size, and a virtual arrow 64 is displayed indicating the direction to take to move into the road 62.

If the determination in S63 is NO, for the time being no guidance is required, so the display of the virtual guide vehicle is stopped, preventing the driver being unsettled by the artificial display of the virtual guide vehicle. When the determination in S61 is NO, the virtual guide vehicle is displayed normally without any change in display mode, based on the initial settings and the settings made in S50, S51 and so forth.

As described in the above, in S15, the virtual guide vehicle is displayed based on the display mode settings made in S57, S58, S60, S64, S65 and S66.

The present invention is not limited to the embodiments described in the foregoing, but may be modified and improved to the extent that such modifications and improvements remain within the scope of the invention.

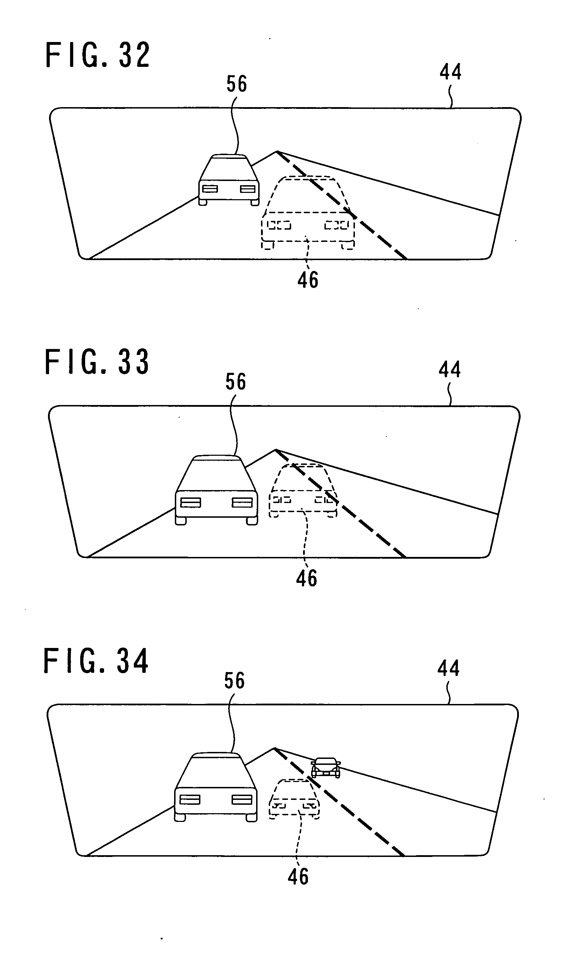

For example, in accordance with the foregoing embodiments, to make it possible for the driver to see an obstruction, the display mode can be modified to reduce the size of the virtual guide vehicle and increase its transmissivity (S57), or to greatly increase the transmissivity of the virtual guide vehicle (S58). However, a configuration may also be used in which, when in the initial settings (2) item, "Display settings when an obstruction is detected on the road," "Avoid by moving laterally" is selected, the virtual guide vehicle display position can be moved, as shown in Figure 32, thereby making it possible for the driver to see an obstruction.

Or, as shown in Figure 33, the display mode can be changed by reducing the size of the virtual guide vehicle and moving the display position. Also, a configuration may be used in which, when moving the virtual guide vehicle display position, the display size of the virtual guide vehicle is reduced to ensure that it does not move into an adjacent lane (Figure 34). A configuration may also be used in which the virtual guide vehicle display position is moved laterally and the transmissivity is increased.

The route guidance apparatus, method and program according to the present invention provide improved safety by reducing the driver's line-of-sight movements, and provide a virtual guide vehicle image that clearly shows the driver which way to go without unsettling the driver. The route guidance apparatus, method and program also enable the vehicle to be driven to a destination with substantially the same ease felt when the driver is following an actual guide car.

Although the present invention has been explained with reference to a specific, preferred embodiment, one of ordinary skill in the art will recognize that modifications and improvements can be made while remaining within the scope and sprit of the present invention. The scope of the present invention is determined solely by the appended claims.

## Claims

1. A route guidance apparatus for guiding a vehicle to a set destination, said apparatus comprising:
guide vehicle display means for displaying a virtual guide vehicle running ahead of the vehicle to guide the vehicle to the destination superimposed on an actual landscape being viewed by a driver of the vehicle; and
display modification means for modifying a display position and/or a display mode of the virtual guide vehicle based on a predetermined condition.

2. A route guidance apparatus according to claim 1, wherein the guide vehicle display means displays the virtual guide vehicle with a transmissivity that enables the actual landscape to be seen.

3. A route guidance apparatus according to claim 1 or 2, wherein said apparatus further comprises detection means for detecting an obstruction in front of the vehicle, and when an obstruction is detected the display modification means modifies a display position and/or a display mode of the virtual guide vehicle to enable the driver to see the obstruction.

4. A route guidance apparatus according to claim 3, wherein when the obstruction is detected the display modification means increases transmissivity of the virtual guide vehicle without modifying a display position of the virtual guide vehicle.

5. A route guidance apparatus according to claim 4, wherein when the obstruction is detected the display modification means increases transmissivity of both side portions of the virtual guide vehicle.

6. A route guidance apparatus according to claim 4, wherein when the obstruction is detected the display modification means increases transmissivity of a side of the virtual guide vehicle near a shoulder of a road.

7. A route guidance apparatus according to claim 4, wherein when the obstruction is detected the display modification means increases transmissivity of a peripheral portion of the virtual guide vehicle so that said transmissivity is higher than a transmissivity of a center portion of the virtual guide vehicle.

8. A virtual guide vehicle according to claim 3 or 4, wherein when the obstruction is detected the display modification means makes the virtual guide vehicle smaller to make the obstruction visible without laterally modifying a display position of the virtual guide vehicle.

9. A virtual guide vehicle according to claim 8, wherein when the obstruction is detected the display modification means decreases a size of the virtual guide vehicle about a center point thereof.

10. A route guidance apparatus according to any of claims 3 to 9,
wherein as vehicle speed increases the display modification means increases the virtual guide vehicle transmissivity or decreases the virtual guide vehicle size.

11. A route guidance apparatus according to any of claims 4 to 10,
wherein at low vehicle speeds the display modification means modifies the virtual guide vehicle transmissivity and size and at high vehicle speeds modifies only the virtual guide vehicle transmissivity.

12. A route guidance apparatus according to claim 3, wherein the display modification means determines a timing for when the driver should see the obstruction and in accordance with that timing modifies the virtual guide vehicle display position to enable the driver to see the obstruction.

13. A route guidance apparatus according to claim 12, wherein along with said modification to the virtual guide vehicle display position the display modification means decreases the virtual guide vehicle size.

14. A route guidance apparatus according to claim 12 or 13, wherein along with said modification to the virtual guide vehicle display position the display modification means increases the virtual guide vehicle transmissivity.

15. A route guidance apparatus according to claim 14, wherein the display modification means increases the transmissivity of the virtual guide vehicle before carrying out said decrease in size.

16. A route guidance apparatus according to claim 12 or 13, wherein the display modification means limits changes to the display position of the virtual guide vehicle to keep the vehicle from departing from its running lane.

17. A route guidance apparatus according to any of claims 1 to 16,
wherein said apparatus further comprises second route guidance means for carrying out route guidance when said display mode is modified.

18. A route guidance apparatus according to any of claims 1 to 17,
wherein the display modification means continues to modify the virtual guide vehicle display position or display mode for a predetermined time.

19. A route guidance apparatus according to any of claims 1 to 3,
wherein said apparatus further comprises preceding vehicle detection means for detecting a preceding vehicle and a distance to said preceding vehicle, wherein
when a preceding vehicle is detected the display modification means modifies the virtual guide vehicle display position and/or display mode at a predetermined timing that enables the driver to see the preceding vehicle.

20. A route guidance apparatus according to claim 19, wherein when a preceding vehicle is detected the display modification means displays the virtual guide vehicle between the vehicle and the preceding vehicle.

21. A route guidance apparatus according to claim 20, wherein when a distance to the preceding vehicle is a predetermined value or below the display modification means reduces the display of the virtual guide vehicle.

22. A route guidance apparatus according to claim 21, wherein said apparatus further comprises third route guidance means for displaying guidance information superimposed on the obstruction or preceding vehicle.

23. A route guidance apparatus according to claim 22, wherein the third route guidance means displays the road and direction that should be taken.

24. A route guidance apparatus according to any of claims 1 to 23,
wherein said apparatus further comprises prohibiting means for prohibiting the display modification means from modifying the virtual guide vehicle display position and/or display mode.

25. A route guidance apparatus according to any of claims 1 to 24,
wherein the guide vehicle display means displays the virtual guide vehicle in predetermined display conditions.

26. A route guidance apparatus according to claim 1, wherein the guide vehicle display means displays the virtual guide vehicle running at a predetermined headway distance corresponding to a speed of the vehicle, and
as the speed of the vehicle increases the display modification means modifies the virtual guide vehicle display position to increase said headway distance.

27. A route guidance apparatus according to claim 26, wherein the display modification means modifies the headway distance by changing a running speed of the virtual guide vehicle.

28. A route guidance apparatus according to claim 27, wherein, before reaching an intersection at which route guidance is to be carried out, the display modification means raises the running speed of the virtual guide vehicle to increase the headway distance.

29. A route guidance apparatus according to claim 28, wherein, when carrying out a modification to the headway distance at an intersection at which route guidance is to be carried out, the display modification means accompanies notification of the modification in the headway distance.

30. A route guidance apparatus according to claim 27, wherein, before reaching an intersection at which route guidance is to be carried out, the display modification means raises the running speed of the virtual guide vehicle to gradually increase the headway distance to more than a predetermined distance and, when the virtual guide vehicle reaches the intersection, decreases the running speed of the virtual guide vehicle to reduce the headway distance until the headway distance is less than the predetermined headway distance.

31. A route guidance apparatus according to claim 27, wherein, directly before reaching an intersection at which route guidance is to be carried out, the display modification means decreases the running speed of the virtual guide vehicle to reduce the headway distance until the headway distance is less than the predetermined headway distance.

32. A route guidance apparatus according to claim 31, wherein, when carrying out a modification to the headway distance at an intersection at which route guidance is to be carried out, the display modification means accompanies notification of a modification in the virtual guide vehicle display mode and headway distance.

33. A route guidance apparatus according to claim 27, wherein, at an intersection at which route guidance is to be carried out, the display modification means temporarily halts the virtual guide vehicle, reducing the headway distance.

34. A route guidance apparatus according to claim 33, wherein, when a driver cannot see a route after turning left or right at an intersection, the display modification means temporarily halts the virtual guide vehicle at the intersection.

35. A route guidance apparatus according to claim 27, wherein, when the vehicle passes through an intersection at which route guidance is to be carried out, the display modification means decreases the running speed of the virtual guide vehicle, decreasing the headway distance.

36. A route guidance apparatus according to claim 27, wherein, when the driver can see a route after turning left or right at an intersection, the display modification means decreases the running speed of the virtual guide vehicle to decrease the headway distance while turning the virtual guide vehicle left or right at the intersection.

37. A route guidance apparatus according to claim 27, wherein, at an intersection at which route guidance is to be carried out, the display modification means decreases the running speed of the virtual guide vehicle to decrease the headway distance while turning the virtual guide vehicle left or right at the intersection, after which the running speed of the virtual guide vehicle is further decreased to further decrease the headway distance.

38. A route guidance apparatus according to claim 26, wherein the display modification means decreases the headway distance by an amount corresponding to a magnitude of curvature of a road on which the vehicle is running.

39. A route guidance apparatus according to claim 38, wherein, on a blind curve, the display modification means reduces the headway distance by lowering a running speed of the virtual guide vehicle, and then maintains that headway distance.

40. A route guidance apparatus according to claim 38, wherein, on mountain roads, the display modification means does not carry out control to reduce the headway distance, even on a blind curve.

41. A route guidance apparatus according to claim 27, wherein said apparatus further comprises preceding vehicle detection means for detecting a preceding vehicle and a distance to said preceding vehicle,
wherein, when a preceding vehicle is detected, the display modification means displays the virtual guide vehicle between the vehicle and the preceding vehicle.

42. A route guidance method for guiding a vehicle to a set destination, comprising the steps of:
superimposing a virtual guide vehicle that guides the vehicle to the destination on an actual landscape being viewed by the vehicle driver; and
modifying a display position and/or a display mode of the virtual guide vehicle based on a predetermined condition.

43. A route guidance method according to claim 42, wherein in the virtual guide vehicle display step, the virtual guide vehicle is displayed running at a predetermined headway distance corresponding to a speed of the vehicle, and
in the display modification step, as the speed of the vehicle increases, the virtual guide vehicle display position is modified to increase said headway distance.

44. A route guidance program for a computer that guides a vehicle to a set destination, said program controlling the computer to display a virtual guide vehicle running ahead of the vehicle to guide the vehicle to the destination superimposed on an actual landscape being viewed by a driver of the vehicle, and to modify a display position and/or a display mode of the virtual guide vehicle based on a predetermined condition.

45. A route guidance program according to claim 44, wherein the virtual guide vehicle is displayed running at a predetermined headway distance corresponding to a speed of the vehicle, and a display position of the virtual guide vehicle is modified to increase said headway distance as the speed of the vehicle increases.
